Europäisches Patentamt

European Patent Office

Office européen des brevets

(19)

(11) Veröffentlichungsnummer: **0 198 289**
**A2**

## (12) EUROPÄISCHE PATENTANMELDUNG

(21) Anmeldenummer: **86104228.1**

(22) Anmeldetag: **27.03.86**

(51) Int. Cl.⁴: **B 07 B 1/46**

(30) Priorität: **06.04.85 DE 3512490**

(43) Veröffentlichungstag der Anmeldung: **22.10.86**
**Patentblatt 86/43**

(84) Benannte Vertragsstaaten: **AT BE CH DE FR GB IT LI LU NL SE**

(71) Anmelder: **Hein, Lehmann Aktiengesellschaft, Fichtenstrasse 75, D-4000 Düsseldorf 1 (DE)**

(72) Erfinder: **Lummerich, Hans, Kündgensweg 8, D-4000 Düsseldorf (DE)**

(74) Vertreter: **Patentanwaltsbüro Cohausz & Florack, Schumannstrasse 97, D-4000 Düsseldorf 1 (DE)**

(54) **Verfahren zum Herstellen von Kunststoffsiebelementen.**

(57)     Die Erfindung betrifft ein Verfahren zum Herstellen von Kunststoff-Siebelementen mit einer Vielzahl von Sieblöchern, die die obere Siebebene darstellende Oberseite mit der dazu parallelen Unterseite verbinden. Als Ausgangsprodukt wird ein Siebelement (1) mit denselben Randabmessungen, aber der doppelten Höhe (H) der benötigten Siebelemente (7, 8) hergestellt oder es werden zwei ungelochte Elemente aufeinandergelegt, wobei nach dem Lochen der Querschnitt der Sieböffnungen (2) dieses doppelt dicken Siebelements (1) von der Oberseite (4) aus zu einem mittleren Bereich hin sich verkleinert und von dem mittleren Bereich aus zur Unterseite (5) hin sich vergrößert und daß danach dieses Siebelement (1) in zwei Siebelemente (7, 8) getrennt wird.

PATENTANWÄLTE:

Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

25.03.1986
- 1 -    HC/Sr 85/502EP B

Hein, Lehmann AG
Fichtenstraße 75
4000 Düsseldorf


Verfahren zum Herstellen von Kunststoffsiebelementen


Die Erfindung betrifft ein Verfahren zum Herstellen von Kunststoff-Siebelementen mit einer Vielzahl von Sieblöchern, die die obere Siebebene darstellende Oberseite mit der dazu parallelen Unterseite verbinden.

Es ist bekannt, daß beim Herstellen, insbesondere beim Stanzen von Kunststoffplatten zu Siebmatten bzw. Siebelementen der senkrechte Querschnitt der Sieböffnungen von oben nach unten aus gesehen sich verkleinert und ab der Mitte der Lochhöhe nach unten sich wieder vergrößert. Diese etwa diaboloförmige Verengung der Sieblöcher führt leicht zu Verstopfungen. Um diese zu verhindern, ist es ferner bekannt, Siebmatten in Formen zu gießen und hierbei dafür zu sorgen, daß die Sieböffnungen im senkrechten Querschnitt trapezförmig sind. Das Herstellen solcher Siebelemente ist verhältnismäßig aufwendig.

Aufgabe der Erfindung ist es, ein einfaches Verfahren zum Herstellen von Kunststoff-Siebelementen zu schaffen, deren Sieböffnungen sich von der Siebebene aus nach unten hin erweitern.

Diese Aufgabe wird erfindungsgemäß dadurch gelöst, daß als Ausgangsprodukt ein Siebelement mit denselben Randabmessungen, aber der doppelten Höhe der benötigten fertigen Siebelemente hergestellt wird, wobei der Querschnitt der Sieböffnungen dieses doppelt dicken Siebelements von der Oberseite aus zu einem mittleren Bereich hin sich verkleinern und von dem mittleren Bereich aus zur Unterseite hin sich vergrößern kann, daß danach dieses Siebelement in zwei Siebelemente in einer Schnittfläche getrennt wird, die parallel zur Oberseite mittig zwischen Oberseite und Unterseite liegt, und daß die Schnittflächen beider erzeugter Siebelemente mit jeweils der einfachen Höhe die Siebebenen bilden.

Alternativ wird vorgeschlagen, daß zwei Siebelemente mit denselben Randabmessungen hergestellt und aufeinandergelegt werden, daß in diese zwei Siebelemente gleichzeitig die Sieböffnungen eingebracht werden, wobei der Querschnitt der Sieböffnungen dieser doppelten Siebelementenschicht von der Oberseite aus zu einem mittleren Bereich hin sich verkleinert und von dem mittleren Bereich aus zur Unterseite hin sich vergrößert.

Das Herstellen solcher Siebelemente ist besonders einfach, wobei man sich auf geschickte Weise den bisherigen Nachteil einer mittigen Verengung zu Nutze macht. Das Herstellen eines einzigen Siebelementes bzw. Siebelementenschicht doppelter Höhe führt zu zwei Siebelementen, deren Öffnungen optimal geformt sind.

Besonders vorteilhaft ist es, daß beim Siebelement doppelter Höhe die Querschnittsverringerung der Sieböffnungen aufgrund eines Stanzens der Sieböffnungen erfolgt, da dann selbständig ohne besondere Vorkehrungen die gewünschte Sieböffnungsform entsteht.

Ein Ausführungsbeispiel des erfindungsgemäßen Verfahrens wird im folgenden näher beschrieben. In der Zeichnung zeigen:

Fig. 1      eine perspektivische Ansicht eines Teiles eines Siebelementes,

Fig. 2      einen senkrechten Querschnitt durch ein Siebelement doppelter Höhe als Ausgangsprodukt, und

Fig. 3      das Siebelement nach Fig. 2, nachdem es in zwei fertige Siebelemente geteilt ist.

Zuerst wird ein Siebelement 1 mit den Außenabmessungen der gewünschten Siebelemente hergestellt, wobei die Höhe H doppelt so groß ist wie bei den späteren fertigen Siebelementen. Die Sieböffnungen 2 können durch Stanzen oder ein anderes Verfahren in das Kunststoffmaterial eingebracht sein. Die Wände 3 der Sieböffnungen 2 sind zur Öffnung hin ausgebaucht, d.h. im waagerechten Querschnitt von der Oberseite 4 aus gesehen verkleinern sich die Sieböffnungen 2 zu einem mittleren Bereich hin und von dort vergrößern sie sich wieder zur Unterseite 5 hin, so daß von einem senkrechten diaboloförmigen Querschnitt gesprochen werden kann.

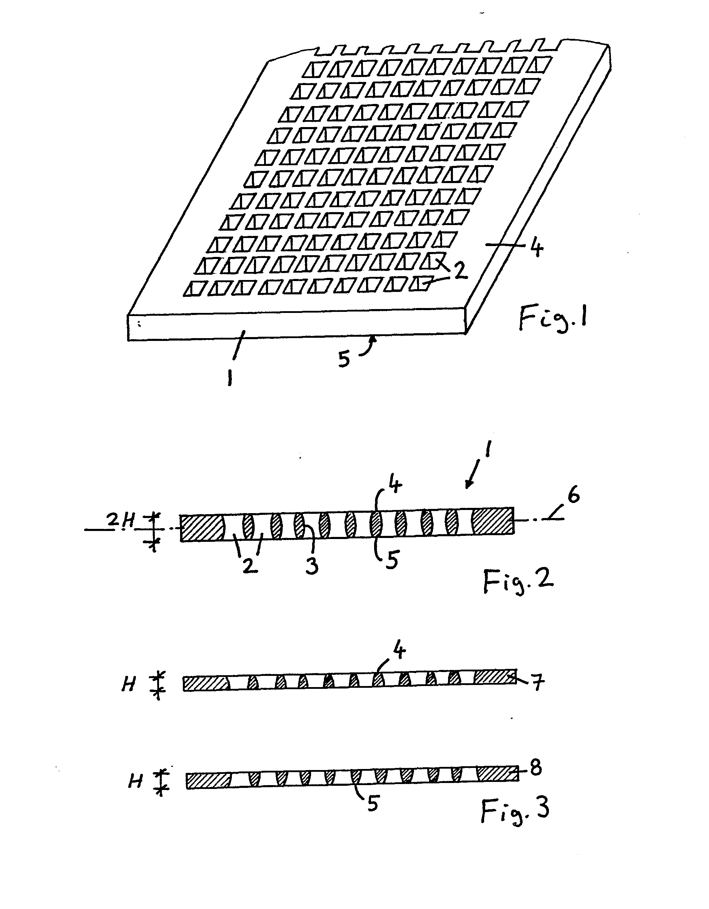

Nach Fertigstellung dieses Vor- bzw. Ausgangsproduktes wird diese Siebmatte doppelter Höhe in zwei Siebelemente längs einer Schnittfläche 6 getrennt, die parallel zur Oberseite 4 als auch damit parallel zur Unterseite 5 mittig zwischen diesen liegt. Hierdurch entstehen zwei neue fertige Siebelemente 7 und 8 mit der einfachen Höhe H. Bei diesen beiden in Fig. 3 dargestellten Siebelementen bilden die Schnittflächen die Siebelementenoberseiten, so daß das in Fig. 3 dargestellte obere Siebelement umgedreht werden muß. Die Sieböffnungen beider Siebelemente vergrößern sich damit im senkrechten Querschnitt von oben nach unten.

In einem alternativen Verfahren werden zwei ungelochte Siebelemente aufeinandergelegt und dann in dieser doppelten Lage mit Sieböffnungen 2 versehen, insbesondere durch Stanzen. Bei diesem Stanzen werden die Öffnungen 2 nahe der Ober- und Unterseite 4, 5 im Durchmesser größer als im mittleren Bereich, so daß nach Abnahme des einen fertigen Siebelements vom anderen die Öffnungen wie beim ersten Verfahren sich zu einer Seite hin verjüngend, insbesondere annähernd konisch oder pyramidenstumpfförmig geformt sind. Statt einem Stanzen können die Öffnungen auch durch andere Verfahren eingebracht werden.

COHAUSZ & FLORACK 0198289

PATENTANWALTSBÜRO

SCHUMANNSTR. 97 D-4000 DÜSSELDORF 1

Telefon: (0211) 683346 · Telefax: (0211) 6790871 · Telex: 8586513 cop d

PATENTANWÄLTE:

Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

25.03.1986
- 5 -                                    HC/Sr 85/502EP C


Ansprüche:


1. Verfahren zum Herstellen von Kunststoff-Siebelementen mit einer Vielzahl von Sieblöchern, die die obere Siebebene darstellende Oberseite mit der dazu parallelen Unterseite verbinden, dadurch gekennzeichnet, daß als Ausgangsprodukt ein Siebelement (1) mit denselben Randabmessungen, aber der doppelten Höhe (H) der benötigten Siebelemente (7, 8) hergestellt wird, wobei der Querschnitt der Sieböffnungen (2) dieses doppelt dicken Siebelements (1) von der Oberseite (4) aus zu einem mittleren Bereich hin sich verkleinert und von dem mittleren Bereich aus zur Unterseite (5) hin sich vergrößert, daß danach dieses Siebelement (1) in zwei Siebelemente (7, 8) in einer Schnittfläche getrennt wird, die parallel zur Oberseite (4) und mittig zwischen Oberseite (4) und Unterseite (5) liegt, und daß die Schnittflächen beider erzeugter Siebelemente mit jeweils der einfachen Höhe (H) die Siebebenen bilden.


2. Verfahren zum Herstellen von Kunststoff-Siebelementen mit einer Vielzahl von Sieblöchern, die die obere Siebebene darstellende Oberseite mit der dazu parallelen Unterseite verbinden, dadurch gekennzeichnet, daß zwei Siebelemente (1) mit denselben Randabmessungen hergestellt und aufeinandergelegt werden, daß in diese

0198289

zwei Siebelemente gleichzeitig die Sieböffnungen eingebracht werden, wobei der Querschnitt der Sieböffnungen (2) dieser doppelten Siebelementenschicht (1) von der Oberseite (4) aus zu einem mittleren Bereich hin sich verkleinert und von dem mittleren Bereich aus zur Unterseite (5) hin sich vergrößert.

3. Verfahren nach Anspruch 1 oder 2, d a d u r c h   g e k e n n z e i c h n e t , daß beim Siebelement (1) oder bei der Siebelementenschicht doppelter Höhe die Querschnittsverringerung der Sieböffnungen (2) aufgrund eines Stanzens der Sieböffnungen erfolgt.

Fig.1

Fig.2

Fig.3